Europäisches Patentamt

European Patent Office

Office européen des brevets

(19)

(11) Numéro de publication: **0 026 017**

**A1**

(12) **DEMANDE DE BREVET EUROPEEN**

(21) Numéro de dépôt: **80200860.7**

(22) Date de dépôt: **12.09.80**

(51) Int. Cl.³: **F 02 M 21/02**

(30) Priorité: **20.09.79 IT 6431979**

(43) Date de publication de la demande:
**01.04.81 Bulletin 81/13**

(84) Etats Contractants Désignés:
**AT BE CH DE FR GB IT LI LU NL SE**

(71) Demandeur: **LOVATO Officine Lovato S.P.A.**
**Strada Casale, 175**
**I-36100 Vicenza(IT)**

(72) Inventeur: **Lovato, Ottorino**
**Viale X Giugno, 151**
**I-36100 Vicenza(IT)**

(74) Mandataire: **Bettello, Luigi, Dott. Ing.**
**Via Col d'Echele, 25**
**I-36100 Vicenza(IT)**

(54) Réducteur à pression à deux étages pour moteurs à gaz liquéfié équipés d'un système de démarrage automatique.

(57) Réducteur à pression à deux étages pour moteurs à gaz liquéfié équipés d'un système de démarrage automatique.

Le réducteur est constitué par un corps cylindrique (1) muni de deux couvercles opposés (2, 3) sur le premier desquels est prévu un boulon prisonnier (4) pour la fixation de l'ensemble à la carrosserie du véhicule.

Les deux chambres de dépression ménagées à l'intérieur du corps (1) présentent une disposition co-axiale qui détermine une symétrie générale parfaite.

L'invention concerne le secteur industriel des moteurs pour véhicules automobiles.

EP 0 026 017 A1

./...

FIG.5

Réducteur à pression à deux étages pour moteurs à gaz liquéfié équipés d'un système de démarrage automatique -

La présente invention a pour objet un réducteur de pression
à deux étages pour moteurs à gaz liquéfié équipés d'un système de démarrage automatique, dont la caractéristique nouvelle
réside essentiellement dans la disposition co-axiale des
chambres de dépression, cette disposition permettant une réduction de l'encombrement de l'ensemble tout en présentant un
avantage substantiel sur le plan pratique du fait qu'elle
assure un fonctionnement plus régulier du moteur par suite
de la symétrie générale obtenue.

Le dessin annexé, donné à titre d'exemple, permettra de mieux
comprendre l'invention, les caractéristiques qu'elle présente
et les avantages qu'elle est susceptible de procurer :

Fig. 1 est une vue en plan par dessus d'un réducteur
suivant l'invention.

Fig. 2 en est une vue en élévation.

Fig. 3 reproduit fig. 1 après enlèvement du couvercle
supérieur.

Fig. 4 est une vue en plan par dessous, le couvercle
inférieur supposé enlevé.

Fig. 5 est une coupe axiale à plus grande échelle.

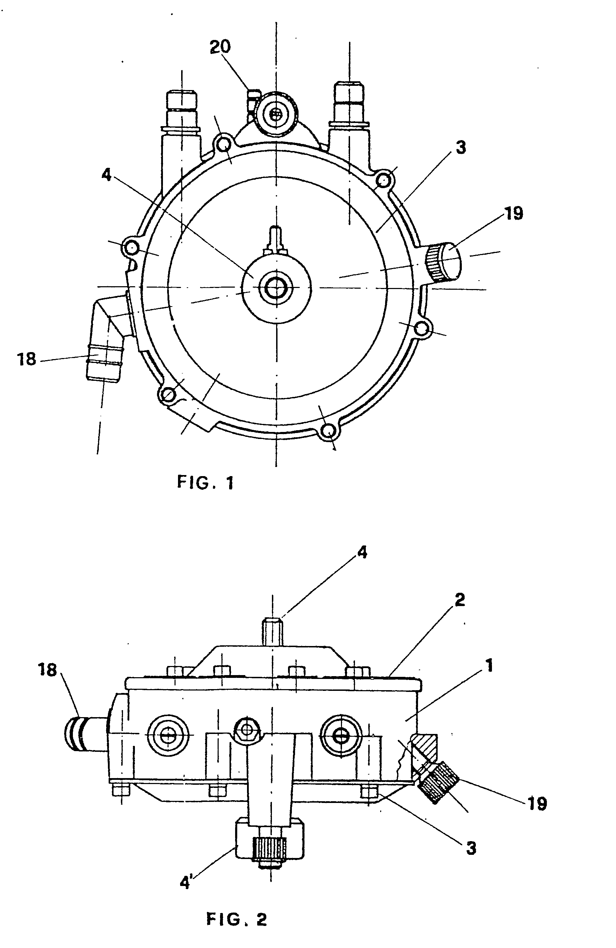

Le réducteur représenté en fig. 1 à 4 comprend un corps cylindrique 1 muni de deux couvercles opposés 2 et 3 ; sur le
premier de ceux-ci est prévu un boulon prisonnier 4 pour la
fixation de l'appareil à la carrosserie du véhicule automobile tandis que le couvercle 3 supporte le dispositif électromagnétique 4 ou gicleur manuel de secours.

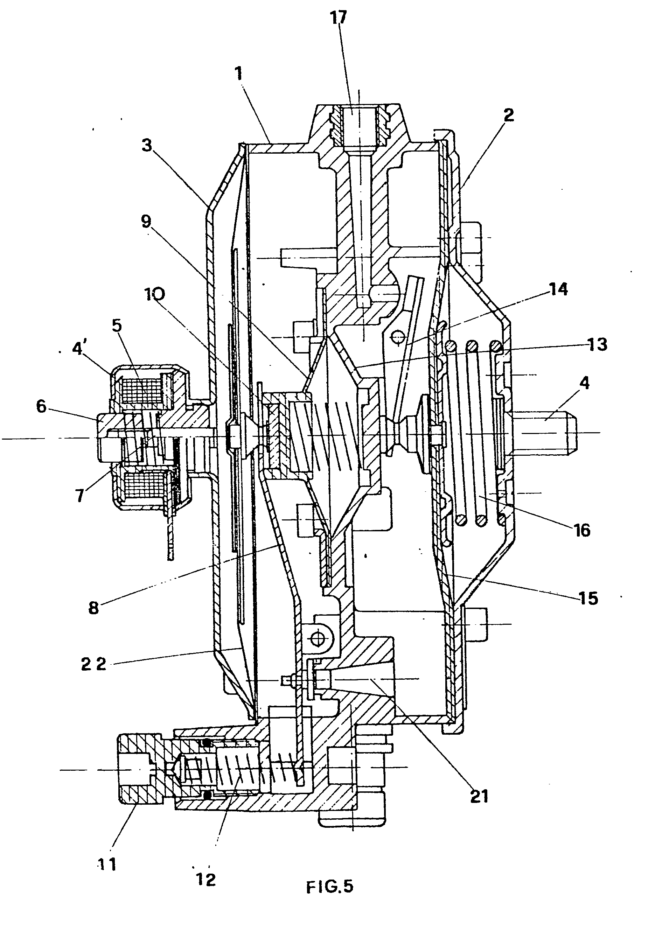

Comme montré en fig. 5 ce dispositif comprend un enroulement
ou bobine 5 ainsi qu'un noyau mobile 6 propre à agir sur un petit arbre 7 pour déplacer le balancier 8 ou clapet du second étage, lequel comprime à son tour la membrane 9 du manostat ; l'aimant permanent 10 solidaire de cette membrane agit de manière automatique sur le balancier 8 lors de chaque manoeuvre de démarrage, en mettant ainsi en action le gicleur automatique.

On notera la vis 11 pour le réglage du minimum, qui agit sur l'extrémité du balancier 8 par l'intermédiaire d'un ressort 12.

La chambre opposée, séparée de la précédente par une cloison intermédiaire 13 solidaire du corps 1, renferme un balancier ou clapet 14 pour le premier étage, ce balancier étant asservi à une membrane 15 soumise à l'action d'un ressort 16.

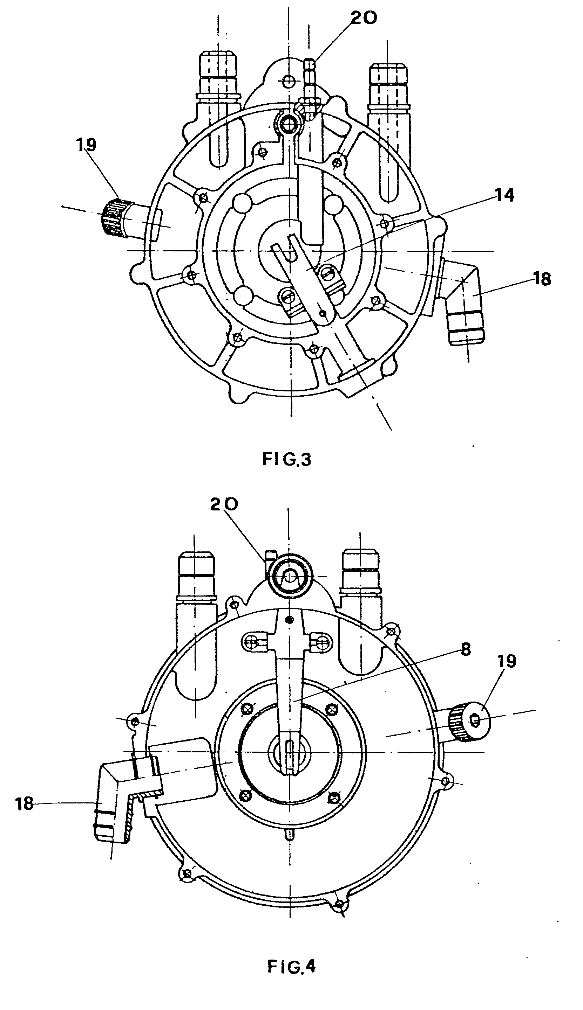

Le réducteur est complété par le raccord d'entrée 20 pour la liaison avec le dépresseur et par la tubulure 18 pour la sortie du gaz (fig. 3 et 4). L'obturateur 19 prévu au niveau du second étage du réducteur permet le refoulement de l'huile tandis que le raccord 20 qui relie la chambre de dépression à la zone amont du papillon du carburateur garantit le fonctionnement du gicleur automatique.

Le fonctionnement du réducteur décrit se comprend aisément. Le gaz à l'état liquide pénètre dans la chambre du premier étage de l'appareil à travers le raccord 20 et une tubulure fermée par le balancier 14 asservi à la membrane 15. Par un conduit 21 fermé par le balancier 8 lui-même commandé par une membrane 22, le gaz peut pénétrer et se dilater à l'intérieur de la chambre du second étage, avant de s'échapper de ce dernier à travers la tubulure de sortie 18.

La nouveauté fondamentale de l'invention réside essentiellement dans le fait que les deux chambres de dépression sont disposées co-axialement ; les avantages obtenus sur le plan pratique concernent aussi bien le fonctionnement de l'appareil que la réduction sensible de l'encombrement par suite de la symétrie générale de l'ensemble.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

Revendication de brevet -

Réducteur de pression à deux étages pour moteurs à gaz liquéfié équipés d'un système de démarrage automatique, du genre
dans lequel chacun des deux étages comprend une chambre de
dépression munie d'un clapet correspondant, caractérisé en ce
que les deux chambres présentent une disposition axiale commune à l'intérieur du corps cylindrique (1) de l'appareil, de
façon à diminuer l'encombrement de celui-ci tout en permettant
d'obtenir un fonctionnement plus régulier dû à la symétrie
générale.

0026017

**FIG. 1**

**FIG. 2**

FIG.3

FIG.4

FIG.5

**Office européen des brevets**

**RAPPORT DE RECHERCHE EUROPEENNE**

EP 80 20 0860

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| PX | REVUE TECHNIQUE AUTOMOBILE, no. 396, janvier 1980, Boulogne BILLANCOURT, M.V. "Les gaz de pétrole liquéfiés", page 90 <br> * Page 90 * | rev. unique | F 02 M 21/02 |
| | US - A - 2 744 387 (REED, TANNER) <br> * Colonne 1, lignes 41-51; colonne 2, lignes 28-35; figure 1 * | rev. unique | |
| | | | DOMAINES TECHNIQUES RECHERCHES (Int. Cl. 3) |
| | US - A - 2 752 758 (TANN) <br> * Colonne 3, ligne 56 à colonne 4, ligne 13; colonne 8, lignes 28-37; figure 2 * | rev. unique | F 02 M |
| | US - A - 2 988 078 (ENSIGN) <br> * Colonne 1, lignes 13-22; colonne 2, lignes 27-61; figure 1 * | rev. unique | |
| | BE - A - 441 919 (REIP) <br> * Page 1, lignes 1-18; figure 1 * | rev. unique | |
| A | FR - A - 1 190 483 (CENTURY GAS EQUIPMENT) <br> * Page 1, colonne de droite en haut; page 2, colonne de gauche, au centre; page 3, colonne de gauche au centre * | rev. unique | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-11-1980 | TATUS |

OEB Form 1503.1  06.78

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| PA | <u>FR - A - 2 446 927</u> (BIAGIOTTI)<br>* Page 2, ligne 10 à page 3, ligne 14 * | rev. unique | |
| | | | **DOMAINES TECHNIQUES RECHERCHES (Int. Cl. ³)** |

OEB Form 1503.2   06.78